# EUROPEAN PATENT APPLICATION

(11) **EP 3 435 201 A1**
(43) Date of publication of application: **30.01.2019**
(21) Application number: 17182815.5
(22) Date of filing: 24.07.2017
(51) Int. Cl.: G06F 3/01

(54) **THERMO-HAPTIC FEEDBACK DEVICE, ELECTRONIC DEVICE AND METHOD**

(71) Applicant: Vestel Elektronik Sanayi ve Ticaret A.S., 45030 Manisa (TR)
(72) Inventor: ÜNVER, Burak, 45030 Manisa (TR)
(74) Representative: Ascherl, Andreas

(57) **Abstract**

The present invention provides thermo-haptic feedback device (100, 200, 300, 400) for providing thermal feedback to a user of an electronic device, the thermo-haptic feedback device (100, 200, 300, 400) comprising a number of heat generation elements (101, 102, 201, 202, 301, 302, 401, 402) arranged adjacent to each other and each configured to controllably generate heat (103, 203), an input device (104, 204) configured to detect a position (105, 205) of a user input (106, 206) on the heat generation elements (101, 102, 201, 202, 301, 302, 401, 402), and a control unit (107, 207) coupled to the heat generation elements (101, 102, 201, 202, 301, 302, 401, 402) and the input device (104, 204) and configured to control at least one of the heat generation elements (101, 102, 201, 202, 301, 302, 401, 402) to heat up according to the detected position (105, 205) of the user input (106, 206). Further, the present invention provides an electronic device and a corresponding method.

## Description

### TECHNICAL FIELD

The invention relates to a thermo-haptic feedback device. Further, the present invention relates to an electronic device and a method.

### BACKGROUND

Although applicable to any electronic device with user inputs, the present invention will mainly be described in conjunction with white goods, especially cookers or cooking devices.

Modern electronic devices usually comprise a user interface that allows users to provide their input to the respective electronic device. In white goods like e.g. cooking devices, also called cooker, in a kitchen for example turning knobs may be provided for the single hobs of the cooking device to set the output power of the hobs.

However, such knobs are mechanical devices that are complex and difficult to manufacture and may comprise an increased probability of failure. Therefore nonmechanical user interfaces have been introduced that do not require any moving mechanical parts. Such user interfaces may e.g. be provided as contactless touch-sensitive interfaces.

With such contactless touch-sensitive interfaces the user interface may e.g. be integrated into the glass surface of a cooking device. A feedback may be given to the user as optical feedback, e.g. via simple lights like points or bar-graphs, or as alphanumerical feedback.

However, e.g. in a cooking device this means the user sets the required temperature with the help of his/her skin or hand, e.g. skin contact, but the feedback about the set value is provided to the user as visual indication. This is especially disadvantageous for users that have bad sight, e.g. because of age, eye illness, blindness. Other users may not be able to understand the visual feedback because of their social background (e.g. language or habits). Further, visual indicators may also comprise an increased probability of failure during their life-time.

Accordingly, there is a need for an improved user feedback in electronic devices.

### SUMMARY OF THE INVENTION

The present invention provides a thermo-haptic feedback device with the features of claim 1, an electronic device with the features of claim 10 and a method with the features of claim 11.

Accordingly, it is provided:
A thermo-haptic feedback device for providing thermal feedback to a user of an electronic device, the thermo-haptic feedback device comprising a number, i.e. one or more, especially at least two, of heat generation elements arranged adjacent to each other and each configured to controllably generate heat, an input device configured to detect a position of a user input on the heat generation elements, and a control unit coupled to the heat generation elements and the input device and configured to control at least one of the heat generation elements to heat up according to the detected position of the user input.

Further, it is provided:
An electronic device comprising a thermo-haptic feedback device according to the present invention, and at least one actuator that is coupled to the thermo-haptic feedback device and is actuated according to a user input that is sensed by the thermo-haptic feedback device.

Further, it is provided:
A method for providing thermo-haptic feedback to a user of an electronic device, the method comprising detecting a position of a user input on heat generation elements arranged adjacent to each other and each configured to controllably generate heat that are provided by the electronic device, and controlling at least one of the heat generation elements to heat up according to the detected position of the user input.

The present invention is based on the finding that it is especially beneficial for a user to receive a feedback in the physical unit that he wants to control. If for example a user dims a light, he will immediately perceive the result of his control action.

Especially with known heat generating devices, like e.g. cooking devices, this is however not possible because the feedback is always provided as visual feedback.

The present invention therefore allows providing user feedback as thermal feedback that may be sensed by the user's skin. In the following such a feedback may also be called thermo-haptic feedback.

To this end the present invention provides heat generation elements. The heat generation elements may e.g. be resistive elements that may be controlled to heat up. Such resistive elements may e.g. be a substrate carrying meander-like copper tracks or traces. It is however understood, that any other technology, like e.g. Peltier elements, may also be used to generate the required heat or thermal feedback. Controlling the heat generation elements may e.g. be performed by controlling the current through the heat generation elements. The current may e.g. be controlled by a controllable constant current source. Such a current is a constant current that is provided continuously to the respective heat generation elements. As alternative, a duty-cycle controlled current may also be used. Such a duty-cycle controlled current will be cyclically turned on and off according to a predetermined duty-cycle, the current amplitude will however always be the maximum current value. A PWM scheme, Pulse Width Modulation, may be used to control the current accordingly.

The heat generation elements may therefore controllably provide thermo-haptic feedback of different intensities to a user.

To determine the intensity of the thermo-haptic feedback the present invention senses the position of a user input on the heat generation elements. The user input may e.g. be a contact with or an approach of the user's skin, e.g. the skin of the user's finger, to the heat generation elements. The input device may then provide a respective feedback to the control unit that may then control the heat generation elements accordingly.

In case that the invention is used e.g. in a cooking device, the control unit may e.g. determine the user-set output power for a cooking hob based on the position of the user's finger on a control section of the glass surface of the cooking device. Depending on this position, the control unit may determine the required output power for the heat generation elements and drive the heat generation elements accordingly.

The control unit may e.g. determine the user input to be between 0% and 100% of the possible output power for the respective cooking hob depending on the position of the user input on the heat generation elements. The control unit my then set the current through the heat generation elements accordingly. If a PWM control scheme is used for the heat generation elements, the user input between 0% and 100% may directly be used to set the duty-cycle of the PWM controlled driving current of the heat generation elements. If a controllable current source is used to drive the heat generation elements, the output current of the current source may be set accordingly. Such a current source may e.g. be voltage controlled and the control unit may output a respective voltage via a D/A-converter.

The control unit may control a single one of the heat generation elements to heat up. The control unit may e.g. select the heat generation element at the position of the user input. If the user e.g. presses a specific field on the glass surface of the cooking device, that specific heat generation element may be heated up, that is positioned on the respective field on the glass surface. It is however also possible that all heat generation elements are heated up according to the user input.

Heating up only a specific heat generation element may e.g. be used with an absolute input device. For example a sliding bar may be provided and starting with 0% at the left end of the bar the user may set the output power of a cooking hob up to 100% on the right end of the bar. If a user input is detected only the heat generation element may be activated that corresponds to the position of the user's input.

In case that all heat generation elements are heated up, a relative control scheme may for example be implemented, where the length of the stroke of the user's finger determines the intensity. It may therefore not be determined in advance what output power is represented by which position. Heating up all heat generation elements in this case still allows providing exact feedback to the user regarding his input.

The control unit may e.g. be a processor based control unit, like e.g. a microcontroller or a microprocessor, with respective peripheral elements, like e.g. a power supply and power drivers for the heat generation elements. A program comprising executable instructions may perform the evaluation of the input device and control the heat generation elements.

The control unit may further provide the position of the user input to a controller of the electronic device that uses the thermo-haptic feedback device. This allows easily controlling the electronic device, like e.g. a cooking device.

Further embodiments of the present invention are subject of the further subclaims and of the following description, referring to the drawings.

In an embodiment, the number of heat generation elements may be sequentially provided laterally adjacent to each other or circularly adjacent to each other.

The heat generation elements may e.g. be provided as a bar or stripe that extends longitudinally. Laterally adjacent in this respect refers to the single heat generation elements being arranged side-by-side forming a stripe-like arrangement. It is understood that the heat generation elements may touch each other or that there may be a margin between the single heat generation elements. This arrangement allows the user to perform a simple swipe with his finger to set the required output power for the respective hob. The direction may e.g. be from left to right, meaning that the left edge of the bar or stripe represents 0% of the possible output power and the right edge represents 100% of the output power. However, the direction may also be reversed. It is further understood, that the bar or stripe may also be arranged vertically.

As an alternative, the heat generation elements may be arranged circularly adjacent. This means that the single heat generation elements may e.g. each have the form of a piece of pizza and the arrangement of all heat generation elements is a circular arrangement. It is however also possible that the heat generation elements are arranged circularly adjacent in a ring-like arrangement, i.e. with no heat generation elements in the center of the ring.

It is understood, that the thermo-haptic feedback device may comprise arrangements of heat generation elements and input devices for every single hob. As alternative, a single such arrangement may be provided and a user may select prior to setting the desired output power to which hob the setting should apply.

In another embodiment, the input device may comprise strain gauges.

Strain gauges are elements that may e.g. change their resistance or any other measurable parameter with pressure being performed on the strain gauge. Such devices may therefore be used to sense a user input, e.g. the pressure provided by the user on the heat generation elements.

To this end, a strain gauge may e.g. be provided with every heat generation element. The strain gauges and the heat generation elements may e.g. be provided paired on a common substrate. As an alternative, the strain gauges may e.g. be provided on the top of a substrate and form the user input device. The heat generation elements may e.g. be provided on the bottom side of the substrate. In this case the substrate needs to be permeable for the heat generated by the heat generation elements to reach the upper side. This may e.g. be achieved by providing the substrate thin enough or selecting a material with sufficient heat conductivity.

In an embodiment, the heat generation elements may be provided on a rigid carrier substrate and one strain gauge may be provided on each end of the rigid carrier substrate, wherein the control unit is configured to determine the position of the user input based on the pressure that is sensed by the two strain gauges, e.g. based on the relation of the two pressure values measured on both ends of the rigid carrier substrate by the respective strain gauges.

The carrier substrate in this embodiment may form a kind of bridge with a strain gauge on each end. The pressure that is provided to the strain gauges will distribute in accordance with the position of the user input on the substrate. If the user input is e.g. performed on one end of the substrate, the full pressure will be provided to the strain gauge that is on the respective end. If the user input is performed in the center of the substrate, half the pressure will be provided to every one of the strain gauges. Summing up, the relation of the pressure values measured by the strain gauges will result in the position in percent of the user input on the substrate. If the substrate is e.g. 10 cm long and the relation of the pressure values is 25%, the user input will be at 2,5 cm of the substrate. It is understood, that a calibration, especially an offset calibration, of the strain gauges may be performed prior to calculating the relation.

In a further embodiment, the input device may comprise a contactless proximity sensor, especially a capacitive proximity sensor, that is arranged below the heat generation elements, especially below a substrate that carries the heat generation elements.

A contactless proximity sensor like e.g. a capacitive proximity sensor may be used as alternative input device. Such a contactless proximity sensor may e.g. be provided below a glass surface of a cooking device and sense the presence of e.g. the user's finger, on the glass surface by detecting changes of a capacitance that is influenced by the presence of the finger.

In such an embodiment the heat generation elements may e.g. be provided as conductive tracks on the upper or the bottom surface of the glass surface or embedded into an intermediate layer of the glass surface. Providing them on the upper surface of the glass surface would also allow using the tracks as tactile borders or surface elements that may be perceived by the user with his finger when sliding over the heat generation elements.

In an embodiment, the control unit may be configured to determine a target output power for the respective heat generation elements based on the rank of the respective heat generation elements in the adjacent arrangement of the heat generation elements.

If for example ten heat generation elements are provided side by side, the first heat generation element will have the rank 0, the second will have the rank 1 and so on. The last heat generation element will have the rank 9. In general the rank of a heat generation element may defined as the position p of the element minus 1: rank = p - 1. With 10 heat generation elements the rank of the third heat generation element would therefore be rank₃ = 3 - 1 = 2. In another example, the positions of the heat generation elements may be directly used as their respective rank.

The control unit may e.g. comprise a look up table that provides the output power for every rank. If for example the user input is detected on the 4^{th} heat generation element, the rank may be defined as 3. The control unit may then look up in the look up table the output power for the heat generation element with rank 3. The look up table may e.g. comprise a duty-cycle or an output voltage, depending on the type of power control of the heat generation elements, as indicated above. It is understood, that for the heat generation elements with the lowest rank the lowest output power may be provided. For the heat generation element with the highest rank the highest output power may be provided. This is however just an example and any other order, e.g. a reverse order, is possible.

The actual values of the output power for the heat generation elements will vary depending on the specific implementation details. If for example the heat generation elements are provided below a substrate the required output power will probably be higher than if the heat generation elements are provided on the top of a glass surface.

Since it is very difficult to calculate the required output power for the single heat generation elements in advance, the output power values may e.g. be experimentally determined during development of the electronic device that carries the thermo-haptic feedback device. The control unit may further comprise a protection function that does not allow the output power to excel or surpass a predetermined maximum threshold value.

In another embodiment, the thermo-haptic feedback device may comprise an ambient temperature sensor configured to sense the ambient temperature, wherein the control unit may be configured to determine the target output power for the respective heat generation elements based on the sensed ambient temperature.

If the ambient temperature is high, a high output power will be required to provide a perceptible heat increase with the heat generation elements. To the contrary, if the ambient temperature is low, a lower temperature of the heat generation elements may already be perceived by a user.

The control unit may e.g. be connected to the ambient temperature sensor and take the measured ambient temperature into account when determining the output power for the heat generation elements. The control unit may e.g. provide an ambient temperature dependent offset to the output power values for the single heat generation elements. As alternative, the control unit may store different look-up tables for different ambient temperatures or a two-dimensional look up table that provides output power levels depending on a rank and an ambient temperature. It is understood, that the control unit may perform an interpolation for a sensed ambient temperature that is not exactly represented in the look-up table or any other data base.

In an embodiment, the control unit may be configured to determine a target temperature step value based on the difference of a maximum allowed temperature and the ambient temperature divided by the number of heat generation elements, wherein the target temperature for the first heat generation element may be the ambient temperature and the target temperature for every following heat generation element may be incremented by the target temperature step value.

The target temperature step value defines an increase in output power for the heat generation elements from one rank to the next. The target temperature step value is calculated based on a difference between the maximum allowed temperature and the ambient temperature. The maximum allowed temperature may e.g. be between 50 °C and 60 °C, for example at 55 °C. This is a temperature that is usually perceived as hot but without hurting a person. The aim is to provide a linear temperature increase over the heat generation elements from the ambient temperature to the maximum allowed temperature.

The difference between the maximum allowed temperature and the ambient temperature is therefore divided by the number of heat generation elements to calculate the target temperature step value. It is understood, that a mapping between output power and temperature may be performed. If for example a target temperature step value of 2 °C is calculated a mapping may be performed that e.g. the output power for the heat generation elements increases by 5% for every rank. This mapping may e.g. be experimentally determined. It is also possible to determine the target temperature for every heat generation element and then map the final temperature to an output power value.

In an example the ambient temperature is 25 °C and the maximum allowed temperature is 55 °C, wherein 10 heat generation elements are provided. This means that the target temperature step value will be (55 °C-25 °C)/10 = 3 °C.

This means that the target temperature of the first heat generation element may be the ambient temperature, the target temperature of the second heat generation element may be the ambient temperature plus 3 °C, the target temperature of the third heat generation element may be the ambient temperature plus 6 °C and so on. In general the target temperature for a heat generation element may be defined as T = ambient temperature + (target temperature step value * rank)

In a further embodiment, the thermo-haptic feedback device may comprise a skin temperature sensor configured to sense the temperature of a user's skin on the heat generation elements, wherein if the skin temperature is higher than the ambient temperature the control unit may be configured to determine the target temperature step value based on the difference of a maximum allowed temperature and the skin temperature divided by the number of heat generation elements, wherein then the target temperature for the first heat generation element may be the skin temperature and the target temperature for every following heat generation element may be incremented by the target temperature step value.

In this embodiment the base value for calculating the target temperature step value is not the ambient temperature. If the user's skin temperature is higher than the ambient temperature, the user's skin temperature may be used instead of the ambient temperature. However, the above explanation applies mutatis mutandis.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a thermo-haptic feedback device according to the present invention;
Fig. 2 shows a block diagram of another embodiment of a thermo-haptic feedback device according to the present invention;
Fig. 3 shows a block diagram of another embodiment of a thermo-haptic feedback device according to the present invention;
Fig. 4 shows a block diagram of another embodiment of a thermo-haptic feedback device according to the present invention;
Fig. 5 shows a flow diagram of an embodiment of a method according to the present invention; and
Fig. 6 shows a flow diagram of another embodiment of a method according to the present invention.

In the figures like reference signs denote like elements unless stated otherwise.

### DETAILED DESCRIPTION OF THE DRAWINGS

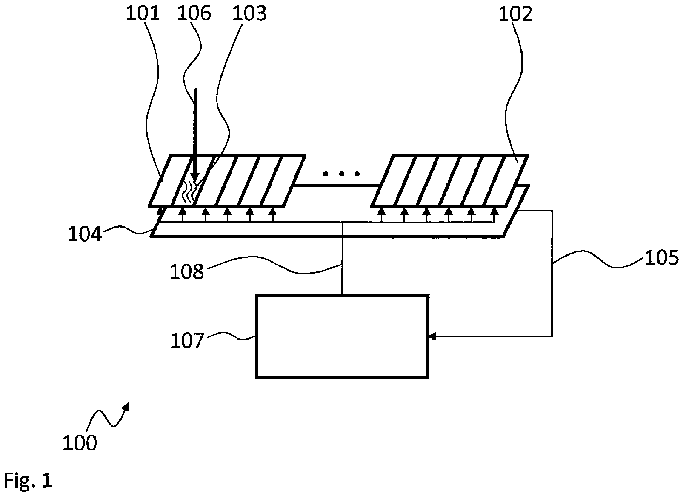

Fig. 1 shows a block diagram of an embodiment of a thermo-haptic feedback device 100. The thermo-haptic feedback device 100 comprises a number of heat generation elements 101, 102. For sake of clarity only the first heat generation element 101 and the last heat generation element 102 are referenced. Although twelve heat generation elements 101, 102 are shown, it is understood that any number of heat generation elements 101, 102 larger or smaller than twelve may also be provided (hinted at by three dots). The thermo-haptic feedback device 100 further comprises an input device 104 and a control unit 107 that is coupled to the heat generation elements 101, 102 and the input device 104.

The input device 104 is arranged under the heat generation elements 101, 102 and may e.g. be a contactless input device 104, like e.g. a capacitive proximity sensor that senses the user input 106. It is understood, that any other type of input device 104 may also be used. For example strain gauges may be provided under both edges, the left and right, of the strip of heat generation elements 101, 102. The pressures measured by such strain gauges may then be used to determine the position of the user input 106 as described above.

The input device 104 provides the position 105 of the user input 106 to the control unit 107. The control unit 107 will then determine a control signal 108 according to the user input 106 and control the heat generation elements 101, 102 accordingly.

The control unit 107 may e.g. heat up all heat generation elements 101, 102 according to the position 105, or the control unit 107 may only heat up the heat generation element on which the user input 106 was detected, as is shown in Fig. 1.

The control unit 107 may e.g. determine the output power for the control signal 108 based on the position 105. The leftmost of the heat generation elements 101, 102 may e.g. represent the lowest output power for the control signal 108. The rightmost of the heat generation elements 101, 102 may represent the maximum output power for the control signal 108. The heat generation elements 101, 102 will then heat up according to the output power of the control signal 108. The higher the output power the higher the heat 103 generated by the respective heat generation elements 101, 102.

The absolute values of output power for the control signal 108 may e.g. be stored in a look-up table in the control unit 107. As alternative a mapping formula may be provided in the control unit 107. Such a mapping formula may e.g. be a linear mapping of the position 105, e.g. in percent, to an output power or a duty cycle of the control signal 108.

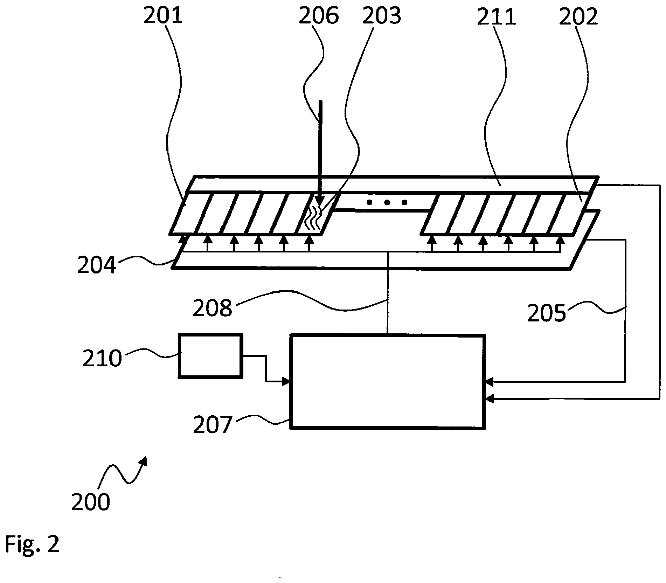

Fig. 2 shows a block diagram of another embodiment of a thermo-haptic feedback device 200. The thermo-haptic feedback device 200 is based on the thermo-haptic feedback device 100 and therefore also comprises the heat generation elements 201, 202 that are coupled to the control unit 207, and the input device 204 that is also coupled to the control unit 207. In addition, the thermo-haptic feedback device 200 comprises an ambient temperature sensor 210 and a skin temperature sensor 211 that are both coupled to the control unit 207. The ambient temperature sensor 210 and the skin temperature sensor 211 provide the respective measured temperatures, i.e. the ambient temperature and the temperature of the user's skin, to the control unit 207.

In the thermo-haptic feedback device 100 the control unit 107 performed a static mapping of the position 105 to the output power of the control signal 108. In contrast, the control unit 207 performs an adaptive control of the output power of the control signal 208. Adaptive in this respect refers to the control unit 207 changing the output power for a specific position 205 based on either the measured ambient temperature, the measured skin temperature or both.

The control unit 207 may e.g. determine a target temperature step value based on the difference of a maximum allowed temperature and the measured ambient temperature divided by the number of heat generation elements 201, 202.

The target temperature for the first heat generation element 201 may then be the measured ambient temperature. The target temperature for every following heat generation element 201, 202 may then be the target temperature of the previous heat generation element incremented by the target temperature step value.

In another embodiment, if the measured skin temperature is higher than the measured ambient temperature the control unit 207 may determine the target temperature step value based on the difference of a maximum allowed temperature and the skin temperature divided by the number of heat generation elements 201, 202.

The target temperature for the first heat generation element 201 may then be the measured skin temperature and the target temperature for every following heat generation element 201, 202 may be the target temperature of the preceding heat generation element 201, 202 incremented by the target temperature step value.

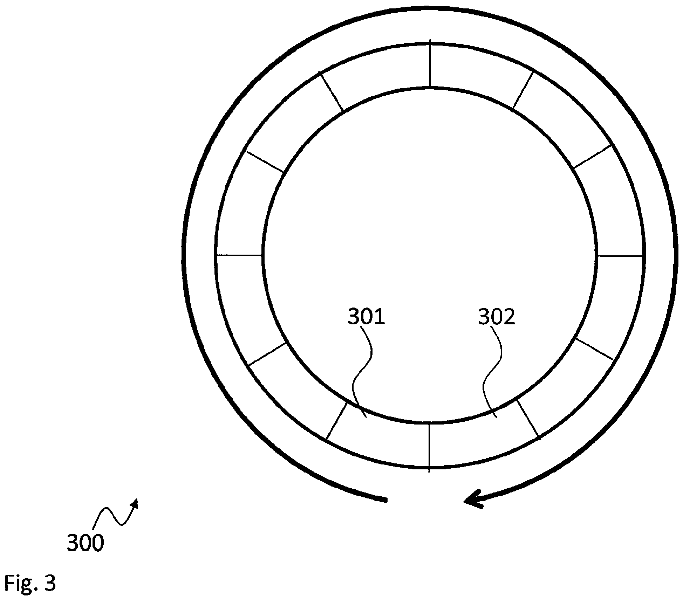

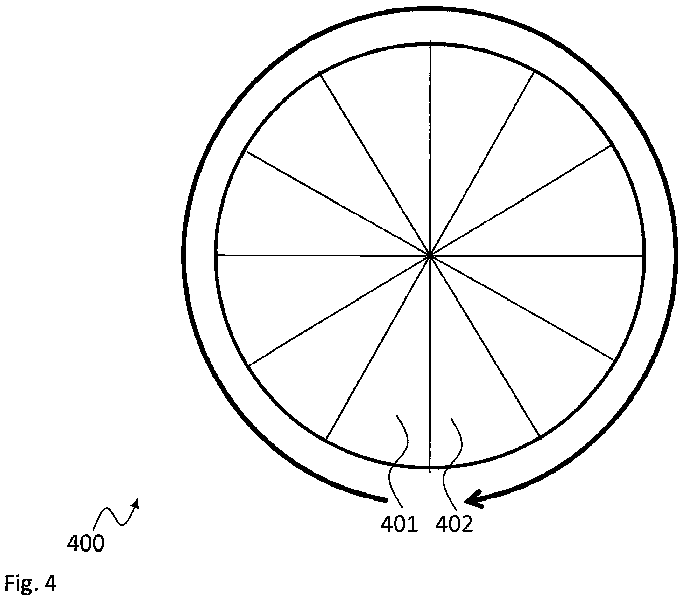

The thermo-haptic feedback device 100 and the thermo-haptic feedback device 200 both comprise linear or elongated input device 104, 204 and respective heat generation elements 101, 102, 201, 202. In Figs. 3 and 4 alternative arrangements will be shown and explained.

Fig. 3 shows a block diagram of another embodiment of a thermo-haptic feedback device 300. The thermo-haptic feedback device 300 comprises heat generation elements 301, 302 that are arranged in a ring-like shape. This means that a ring of heat generation elements 301, 302 is provided with a spacing in the center of the ring that has no active elements.

In Fig. 3 no input device is expressly shown. It is however understood, that the thermo-haptic feedback device 300 may comprise any type of input device. The thermo-haptic feedback device 300 may e.g. comprise an input device that is arranged as sensing layer on the heat generation elements 301, 302 or that is arranged as a contactless sensing layer below the heat generation elements 301, 302. The input device may also comprise e.g. three strain gauges on three corners of an imaginary triangle that is matched into the circular arrangement of the heat generation elements 301, 302. The measured pressures may then be set in ratio to determine the position of the user input.

Fig. 4 shows a block diagram of another embodiment of a thermo-haptic feedback device 400 that is similar to the thermo-haptic feedback device 300 in that a circular arrangement is provided for the heat generation elements 401, 402. However, in the thermo-haptic feedback device 400 the heat generation elements 401, 402 are not arranged in a ring shaped arrangement but in a circular arrangement. The single heat generation elements 401, 402 each comprise a circular segment shape, i.e. like a piece of pizza.

The above said with regard to the control unit, and the input device also applies to the thermo-haptic feedback device 400.

Although not explicitly mentioned, the thermo-haptic feedback device 300 and the thermo-haptic feedback device 400 may both be combined with features of the thermo-haptic feedback device 100 and the thermo-haptic feedback device 200. The thermo-haptic feedback device 300 or the thermo-haptic feedback device 400 may e.g. also comprise an ambient temperature sensor and/or a skin temperature sensor.

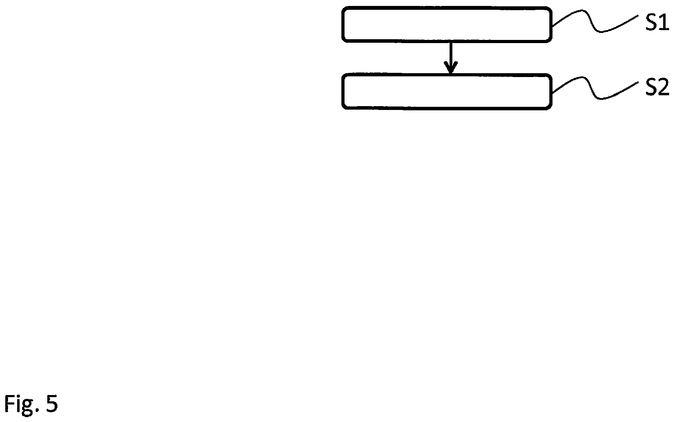

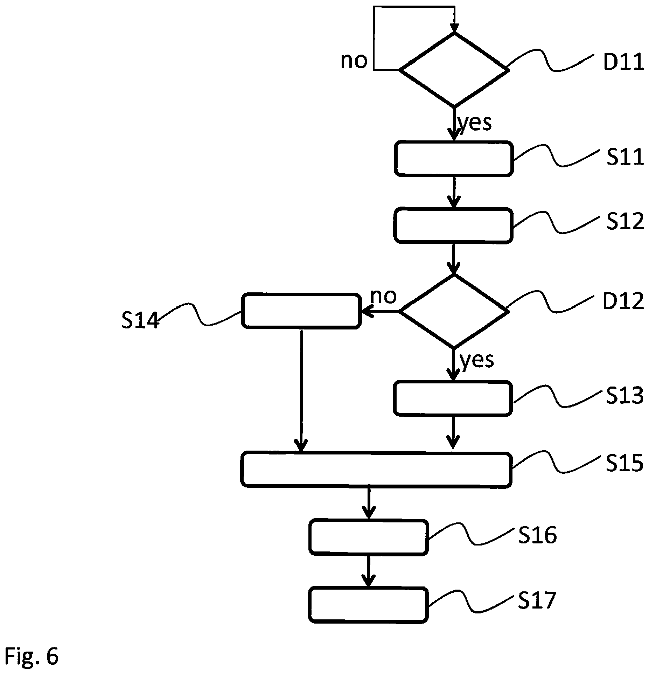

For sake of clarity in the following description of the method based Figs. 5 and 6 the reference signs used above in the description of apparatus based Figs. 1 - 4 will be maintained.

Fig. 5 shows a flow diagram of a method for providing thermo-haptic feedback to a user of an electronic device.

The method comprises detecting S1 a position 105, 205 of a user input 106, 206 on heat generation elements 101, 102, 201, 202, 301, 302, 401, 402 arranged adjacent to each other and each configured to controllably generate heat 103, 203. The heat generation elements 101, 102, 201, 202, 301, 302, 401, 402 may e.g. be provided by a thermo-haptic feedback device 100, 200, 300, 400 according to the present invention.

The method further comprises controlling S2 at least one of the heat generation elements 101, 102, 201, 202, 301, 302, 401, 402 to heat up according to the detected position 105, 205 of the user input 106, 206.

Controlling S2 may comprise determining a target output power for the respective heat generation elements 101, 102, 201, 202, 301, 302, 401, 402 based on the rank of the respective heat generation elements 101, 102, 201, 202, 301, 302, 401, 402 in the adjacent arrangement of the heat generation elements 101, 102, 201, 202, 301, 302, 401, 402.

The method may also comprise sensing the ambient temperature around the electronic device. Controlling S2 may then comprise determining the target output power for the respective heat generation elements 101, 102, 201, 202, 301, 302, 401, 402 based on the sensed ambient temperature. Controlling S2 may further comprise determining a target temperature step value based on the difference of a maximum allowed temperature and the ambient temperature divided by the number of heat generation elements 101, 102, 201, 202, 301, 302, 401, 402. The target temperature for the first heat generation element 101, 102, 201, 202, 301, 302, 401, 402 may be the ambient temperature, and the target temperature for every following heat generation element 101, 102, 201, 202, 301, 302, 401, 402 is incremented by the target temperature step value.

The method may also comprise sensing the temperature of a user's skin on the heat generation elements 101, 102, 201, 202, 301, 302, 401, 402. If the skin temperature is higher than the ambient temperature the target temperature step value may then be determined based on the difference of a maximum allowed temperature and the skin temperature divided by the number of heat generation elements 101, 102, 201, 202, 301, 302, 401, 402. The target temperature for the first heat generation element 101, 102, 201, 202, 301, 302, 401, 402 may be the skin temperature, and the target temperature for every following heat generation element 101, 102, 201, 202, 301, 302, 401, 402 may be incremented by the target temperature step value.

Fig. 6 shows a flow diagram of an embodiment of a method according to the present invention.

The method starts with monitoring if the presence of a user input 106, 206, e.g. a user's finger, is detected by the input device 104, 204 in decision D11. If this is the case, in step S11 the ambient temperature is sensed. In optional step S12 the temperature of the user's skin is sensed. If step S12 is performed the decision D12 branches to step S13 if the ambient temperature is higher than the skin temperature. Otherwise decision D12 branches to step S14. In step S13 the ambient temperature is set as the base value for calculating the target temperatures for the heat generation elements 101, 102, 201, 202, 301, 302, 401, 402. In step S14 in contrast the skin temperature is set as the base value for calculating the target temperatures for the heat generation elements 101, 102, 201, 202, 301, 302, 401, 402.

In step S15 the target temperature step value is calculated based on the base value set in step S13 or S14. The base value is subtracted from the maximum allowed temperature and the result is divided by the number of heat generation elements 101, 102, 201, 202, 301, 302, 401, 402.

The temperature that should be set with the heat generation elements 101, 102, 201, 202, 301, 302, 401, 402 is then calculated in step S16 by multiplying the target temperature step value with the rank of the respective heat generation element 101, 102, 201, 202, 301, 302, 401, 402. Finally, in step S17 the temperature of the respective heat generation elements 101, 102, 201, 202, 301, 302, 401, 402 is set accordingly.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides thermo-haptic feedback device 100, 200, 300, 400 for providing thermal feedback to a user of an electronic device, the thermo-haptic feedback device 100, 200, 300, 400 comprising a number of heat generation elements 101, 102, 201, 202, 301, 302, 401, 402 arranged adjacent to each other and each configured to controllably generate heat 103, 203, an input device 104, 204 configured to detect a position 105, 205 of a user input 106, 206 on the heat generation elements 101, 102, 201, 202, 301, 302, 401, 402, and a control unit 107, 207 coupled to the heat generation elements 101, 102, 201, 202, 301, 302, 401, 402 and the input device 104, 204 and configured to control at least one of the heat generation elements 101, 102, 201, 202, 301, 302, 401, 402 to heat up according to the detected position 105, 205 of the user input 106, 206. Further, the present invention provides an electronic device and a corresponding method.

### List of reference signs

- 100, 200, 300, 400: thermo-haptic feedback device
- 101, 102, 201, 202, 301, 302, 401, 402: heat generation element
- 103,203: heat
- 104,204: input device
- 105, 205: position
- 106, 206: user input
- 107,207: control unit
- 108, 208: control signal

- 210: ambient temperature sensor
- 211: skin temperature sensor

- S1, S2: method step
- S11 - S17: method step
- D11, D12: decision

## Claims

1. Thermo-haptic feedback device (100, 200, 300, 400) for providing thermal feedback to a user of an electronic device, the thermo-haptic feedback device (100, 200, 300, 400) comprising:
a number of heat generation elements (101, 102, 201, 202, 301, 302, 401, 402) arranged adjacent to each other and each configured to controllably generate heat (103, 203),
an input device (104, 204) configured to detect a position (105, 205) of a user input (106, 206) on the heat generation elements (101, 102, 201, 202, 301, 302, 401, 402), and
a control unit (107, 207) coupled to the heat generation elements (101, 102, 201, 202, 301, 302, 401, 402) and the input device (104, 204) and configured to control at least one of the heat generation elements (101, 102, 201, 202, 301, 302, 401, 402) to heat up according to the detected position (105, 205) of the user input (106, 206).

2. Thermo-haptic feedback device (100, 200, 300, 400) according to claim 1, wherein the number of heat generation elements (101, 102, 201, 202, 301, 302, 401, 402) are sequentially provided laterally adjacent to each other or circularly adjacent to each other.

3. Thermo-haptic feedback device (100, 200, 300, 400) according to any one of the preceding claims, wherein the input device (104, 204) comprises strain gauges.

4. Thermo-haptic feedback device (100, 200, 300, 400) according to claim 3, wherein the heat generation elements (101, 102, 201, 202, 301, 302, 401, 402) are provided on a rigid carrier substrate and one strain gauge is provided on each end of the rigid carrier substrate, and
wherein the control unit (107, 207) is configured to determine the position (105, 205) of the user input (106, 206) based on the pressure that is sensed by the two strain gauges.

5. Thermo-haptic feedback device (100, 200, 300, 400) according to any one of the preceding claims 1 and 2, wherein the input device (104, 204) comprises a contactless proximity sensor, especially a capacitive proximity sensor, that is arranged below the heat generation elements (101, 102, 201, 202, 301, 302, 401, 402), especially below a substrate that carries the heat generation elements (101, 102, 201, 202, 301, 302, 401, 402).

6. Thermo-haptic feedback device (100, 200, 300, 400) according to any one of the preceding claims, wherein the control unit (107, 207) is configured to determine a target output power for the respective heat generation elements (101, 102, 201, 202, 301, 302, 401, 402) based on the rank of the respective heat generation elements (101, 102, 201, 202, 301, 302, 401, 402) in the adjacent arrangement of the heat generation elements (101, 102, 201, 202, 301, 302, 401, 402).

7. Thermo-haptic feedback device (100, 200, 300, 400) according to any one of the preceding claims, comprising an ambient temperature sensor (210) configured to sense the ambient temperature, wherein the control unit (107, 207) is configured to determine the target output power for the respective heat generation elements (101, 102, 201, 202, 301, 302, 401, 402) based on the sensed ambient temperature.

8. Thermo-haptic feedback device (100, 200, 300, 400) according to claims 6 and 7, wherein the control unit (107, 207) is configured to determine a target temperature step value based on the difference of a maximum allowed temperature and the ambient temperature divided by the number of heat generation elements (101, 102, 201, 202, 301, 302, 401, 402), wherein the target temperature for the first heat generation element (101, 102, 201, 202, 301, 302, 401, 402) is the ambient temperature and the target temperature for every following heat generation element (101, 102, 201, 202, 301, 302, 401, 402) is incremented by the target temperature step value.

9. Thermo-haptic feedback device (100, 200, 300, 400) according to any one of the preceding claims 6 to 8, comprising a skin temperature sensor (211) configured to sense the temperature of a user's skin on the heat generation elements (101, 102, 201, 202, 301, 302, 401, 402), wherein if the skin temperature is higher than the ambient temperature the control unit (107, 207) is configured to determine the target temperature step value based on the difference of a maximum allowed temperature and the skin temperature divided by the number of heat generation elements (101, 102, 201, 202, 301, 302, 401, 402), wherein then the target temperature for the first heat generation element (101, 102, 201, 202, 301, 302, 401, 402) is the skin temperature and the target temperature for every following heat generation element (101, 102, 201, 202, 301, 302, 401, 402) is incremented by the target temperature step value.

10. Electronic device comprising:
a thermo-haptic feedback device (100, 200, 300, 400) according to any one of the preceding claims, and
at least one actuator that is coupled to the thermo-haptic feedback device (100, 200, 300, 400) and is actuated according to a user input (106, 206) that is sensed by the thermo-haptic feedback device (100, 200, 300, 400).

11. Method for providing thermo-haptic feedback to a user of an electronic device, the method comprising:
Detecting (S1) a position (105, 205) of a user input (106, 206) on heat generation elements (101, 102, 201, 202, 301, 302, 401, 402) arranged adjacent to each other and each configured to controllably generate heat (103, 203) that are provided by the electronic device, and
controlling (S2) at least one of the heat generation elements (101, 102, 201, 202, 301, 302, 401, 402) to heat up according to the detected position (105, 205) of the user input (106, 206).

12. Method according claim 11, wherein controlling comprises determining a target output power for the respective heat generation elements (101, 102, 201, 202, 301, 302, 401, 402) based on the rank of the respective heat generation elements (101, 102, 201, 202, 301, 302, 401, 402) in the adjacent arrangement of the heat generation elements (101, 102, 201, 202, 301, 302, 401, 402).

13. Method according to claim 12, comprising sensing the ambient temperature, wherein controlling comprises determining the target output power for the respective heat generation elements (101, 102, 201, 202, 301, 302, 401, 402) based on the sensed ambient temperature.

14. Method according to claims 12 and 13, wherein controlling comprises determining a target temperature step value based on the difference of a maximum allowed temperature and the ambient temperature divided by the number of heat generation elements (101, 102, 201, 202, 301, 302, 401, 402), wherein the target temperature for the first heat generation element (101, 102, 201, 202, 301, 302, 401, 402) is the ambient temperature and the target temperature for every following heat generation element (101, 102, 201, 202, 301, 302, 401, 402) is incremented by the target temperature step value.

15. Method according to any one of the preceding claims 13 to 14, comprising sensing the temperature of a user's skin on the heat generation elements (101, 102, 201, 202, 301, 302, 401, 402), wherein if the skin temperature is higher than the ambient temperature the target temperature step value is determined based on the difference of a maximum allowed temperature and the skin temperature divided by the number of heat generation elements (101, 102, 201, 202, 301, 302, 401, 402), wherein then the target temperature for the first heat generation element (101, 102, 201, 202, 301, 302, 401, 402) is the skin temperature and the target temperature for every following heat generation element (101, 102, 201, 202, 301, 302, 401, 402) is incremented by the target temperature step value.
